# EUROPEAN PATENT APPLICATION

(11) **EP 3 726 447 A1**
(43) Date of publication of application: **21.10.2020**
(21) Application number: 18887440.8
(22) Date of filing: 07.12.2018
(51) Int. Cl.: G06Q 30/02

(54) **BANNER ADVERTISEMENT SERVICE SYSTEM IN WHICH BANNER ADVERTISEMENT-SPECIFIC PRIORITY IS DETERMINED BY REFERENCE AREA**

(30) Priority: 15.12.2017 KR 20170173297
(71) Applicant: Altsoft. Inc., Seoul 06097 (KR)
(72) Inventor: KIM, Chan Hong, Seoul 06097 (KR)
(74) Representative: M. Zardi & Co S.A.
(86) International application number: PCT/KR2018/015574
(87) International publication number: WO 2019/117557

(57) **Abstract**

According to the present invention, in a banner advertisement service system in which a priority of each banner advertisement is decided by a reference region, a reference region for a banner advertisement is set, and thus, the banner advertisement is displayed on a local device regardless of a physical location of an advertiser in a region where an advertisement is desired to be provided.

## Description

### Technical Field

The present invention relates to a banner advertisement service system, and more particularly, to a banner advertisement service system in which a priority of each advertisement is decided by a reference region.

### Background Art

Advertisements in the related art have been provided through mass media, such as newspapers, magazines, and broadcasting. However, with the development of mobile communication technology, the number of users who have access to mass media through mobile devices has increased exponentially, and thus attempts have been made to provide advertisements through the mobile devices. Advertisements through the mass media in the related art are unilaterally provided to an unspecified number of people and thus have the limitation of being unable to be provided to a user in a customized manner. However, an advertisement through the mobile device has the advantage of being able to be provided to the user in a customized manner using various pieces of information collected in the mobile device. Therefore, the advantage of providing the customized advertisement to the user in a more effective manner has made it possible for the advertisement through the mobile device to become one of the most important advertisement means.

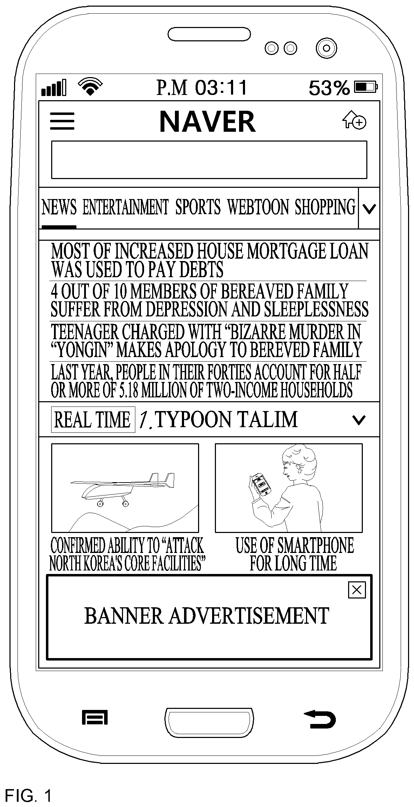

FIG. 1 is a diagram illustrating a banner advertisement that is displayed on the mobile device. Among advertisements through the mobile device, a banner advertisement is one of the most common advertisement methods. As illustrated in FIG. 1, generally, during web surfing, content is displayed on a display, and advertisement content in the shape of a bar is also displayed on one region thereof. This advertisement banner in the shape of a bar corresponds to a banner. By taking a look at advertisement content and clicking on a banner, the user has access to a specific website linked to the banner. In this manner, the banner advertisement can unconstrainedly guide the user toward the specific website.

Furthermore, the wide use of mobile devices among users has resulted in providing the banner advertisement using location information of the mobile device. Specifically, the use of the location information collected through a GPS module of the mobile device makes it possible to provide a customized banner advertisement to a user. For example, in a case where a user is currently located in "Gangnam Station", banner advertisements of companies in the vicinity of "Gang Nam Gu Station" can be provided to the user. That is, the banner advertisement is provided using the advertiser's location and the information on the user's location, and thus the banner advertisement can be provided to the user in a more efficient manner.

However, in many cases, in one or several business fields, when providing the banner advertisement to the user, a location where an advertisement has to be noticeable, rather than a physical location of an advertiser, has to be considered. For example, in a case where the advertiser is a company that develops software, it is effective to make the banner advertisement noticeable in a place where many users who use the software are located, regardless of a physical location of such a company. In the related art, in a case where a banner advertisement is provided using the physical location of the advertiser, there is a problem in that, in a corresponding business field, the advertisement is not effectively provided to a user.

Examples of the related art directed to the banner advertisement that is provided through the mobile device include Korean Patent Publication No. 10-2011-0139871 tilted "METHOD AND SYSTEM FOR PROVIDING ADVERTISEMENT ON BASIS OF LOCATION OF TERMINAL".

### Disclosure

### Technical Problem

An objective of the present invention, which was conceived to solve the problem described above, is to provide a banner advertisement service system in which a priority of each banner advertisement is decided by a reference region, which is capable of setting a reference region for a banner advertisement and thus displaying the banner advertisement on a local device regardless of a physical location of an advertiser in a region where an advertisement is desired to be provided.

Another objective of the present invention is to provide a banner advertisement service system in which a priority of each banner advertisement is decided by a reference region, which is capable of enabling a banner advertisement, which is displayed on a local device, to vary according to location information of the local device and of setting a priority of the banner advertisement on the basis of an area and distance of a reference region, thereby preferentially making the banner advertisement noticeable in a location desired by an advertiser.

### Technical Solution

In order to accomplish the objective described above, according to an aspect of the present invention, there is provided a banner advertisement service system for providing a banner advertisement to a local device, in which a priority of each banner advertisement is decided by a reference region,
the banner advertisement service system
includes a service providing server that receives a request for the banner advertisement from the local device and provides the banner advertisement to the local device.

In the banner advertisement service system, the service providing server includes a database module, a priority setting module, and an advertisement providing module.

In the service providing server, content to be displayed as the banner advertisement and a reference region, independent of a location of an advertiser, for the banner advertisement, are input and stored into the database module.

In the service providing server, the priority setting module sets priorities of banner advertisements according to an area and distance of the reference region, stored in the database module, for the banner advertisement, with respect to a position specified by location information of the local device.

In the service providing server, the advertisement providing module arranges the banner advertisements stored in the database module according to the priorities thereof that are set by the priority setting module and provides the resulting banner advertisements to the local device.

In the service providing server, the priority setting module

sets the priorities of the banner advertisements according to whether or not the reference region, stored in the database module, for the banner advertisement includes the position specified by the location information of the local device.

In the service providing server, the priority setting module sets
the priorities of the banner advertisements in the order of decreasing an area of the reference region for the banner advertisement, in a case where the reference region, stored in the database module, for the banner advertisement includes the position specified by the location information of the local device.

In the service providing server, the priority setting module
sets the priorities of the banner advertisements in the order of increasing the area of the reference region for the banner advertisement, in a case where benefit has to be preferentially provided to a small-scale company.

In the service providing server, the priority setting module
sets the priorities of the banner advertisements in the order of increasing the least distance between the position specified by the location information of the local device and a border line of the reference region for the banner advertisement, in a case where the reference region, stored in the database module, for the banner advertisement does not include the position specified by the location information of the local device.

In the banner advertisement service system, in a case where the least distances are the same, the priority setting module
may set the priorities of the banner advertisements in the order of decreasing the area of the reference region for the banner advertisement.

In the banner advertisement service system, the priority setting module
may set the priorities of the banner advertisements according to the respective categories thereof.

In the banner advertisement service system, the reference region for the banner advertisement
may take the shape of a polygon or a circle.

In the banner advertisement service system, multiple reference regions for one banner advertisement
may be input and stored into the database module.

In the banner advertisement service system, at least part of one reference region
may cover part of another reference region.

In the banner advertisement service system, the service providing server
may receive the location information of the local device at a predetermined time interval.

### Advantageous Effects

According to the present invention, in a banner advertisement service system in which a priority of each banner advertisement is decided by a reference region, a reference region for a banner advertisement can be set, and thus the banner advertisement can be displayed on a local device regardless of a physical location of an advertiser in a region where an advertisement is desired to be provided.

In addition, according to the present invention, in the banner advertisement service system in which a priority of each banner advertisement is decided by a reference region, the banner advertisement that is displayed on the local device can vary according to location information of the local device, and a priority of the banner advertisement can be set on the basis of an area and distance of the reference region, thereby preferentially making the banner advertisement noticeable in a location desired by the advertiser.

### Description of Drawings

FIG. 1 is a diagram illustrating a banner advertisement that is displayed on a mobile device;
FIG. 2 is a diagram illustrating a configuration of a banner advertisement service system in which a priority of each banner advertisement is decided by a reference region, according to an embodiment of the present invention;
FIG. 3 is a diagram illustrating a configuration of a service providing server 100 in the banner advertisement service system in which a priority of each banner advertisement is decided by a reference region, according to the embodiment of the present invention;
FIG. 4 is a diagram illustrating reference regions in the banner advertisement service system in which a priority of each banner advertisement is decided by a reference region, according to the embodiment of the present invention;
FIG. 5 is a diagram illustrating that priorities are set by the priority setting module 120 in the banner advertisement service system in which a priority of each banner advertisement is decided by a reference region, according to the embodiment of the present invention;
FIG. 6 is a diagram illustrating that the respective priorities of reference regions B, C, and D are set by the priority setting module 120 in the banner advertisement service system in which a priority of each banner advertisement is decided by a reference region, according to the embodiment of the present invention;
FIG. 7 is a diagram illustrating that the respective priorities of reference regions A, E, and F are set by the priority setting module 120 in the banner advertisement service system in which a priority of each banner advertisement is decided by a reference region, according to the embodiment of the present invention; and
FIG. 8 is a diagram illustrating a banner advertisement that is output to a display unit of a local device 200 in the banner advertisement service system in which a priority of each banner advertisement is decided by a reference region, according to the embodiment of the present invention.

### <Description of the Reference Numerals in the Drawings>

X: position specified by location information of a local device
100: service providing server
110: database module
120: priority setting module
130: advertisement providing module
200: local device

### Best Mode

### Mode for Invention

With reference to the accompanying drawings, preferable embodiments will be described below in enough detail to enable a person of ordinary skill in the art to which the present invention pertains to practice the present invention without undue experimentation. However, when the preferable embodiments of the present invention are specifically described, in a case where it is determined that detailed descriptions of functions and configurations known in the related art will unnecessarily make the nature and gist of the present invention unapparent, the detailed descriptions thereof are omitted. In addition, constituent elements that perform the same or similar functions or operations are given the same or similar reference characters throughout all the drawings.

In addition, when a constituent element is referred to as being "connected to" one other constituent element, the constituent element may be "directly connected to" one other constituent element or may be "indirectly connected to" one other constituent with an intervening constituent element in between. In addition, when the expression "includes a certain constituent element", unless specifically otherwise described, this means that "further includes any other constituent element, not excluding any other constituent element".

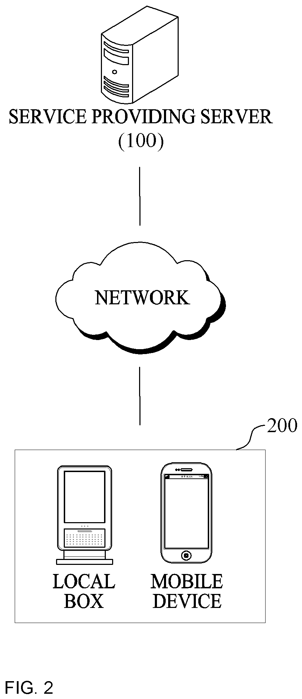

FIG. 2 is a diagram illustrating a configuration of a banner advertisement service system in which a priority of each banner advertisement is decided by a reference region, according to an embodiment of the present invention. As illustrated in FIG. 2, the banner advertisement service system for providing the banner advertisement to a local device 200 in which a priority of each banner advertisement is decided by a reference region according to the embodiment of the present invention, includes a service providing server 100, and may further include the local device 200.

The service providing server 100 receives a banner advertisement request from the local device 200 and provides a banner advertisement to the local device 200. At this point, the providing of the banner advertisement to the local device 200 by the service providing server 100 means transmission of pieces of data on the banner advertisement to be displayed on a display of the local device 200 to the local device 200 over a network.

The local device 200 is a device that is capable of transmitting and receiving pieces of data to and from the service providing server 100 over a network. As illustrated in FIG. 2, the local devices 200 here include a local box and a mobile device.

The local box may be a device that includes a display unit. In addition, the local box may be a device that is capable of transmitting and receiving pieces of data to the service providing server 100 over a network. Therefore, the local box receives pieces of data on the banner advertisement from the service providing server 100 and outputs the banner advertisement to the display unit. Furthermore, the local boxes include any specific types of devices that are capable of transmitting and receiving pieces of data to and from the service providing server 100 over a network and outputting the banner advertisement through the display unit.

Mobile devices 200 incudes devices, such as a smartphone, a tablet PC, a wearable device. However, the mobile device 200 is not limited to the above-described types of devices. The mobile devices 200 include any specific types of devices that are capable of transmitting and receiving pieces of data to and from the service providing server 100 over a network and outputting the banner advertisement through the display unit.

Furthermore, networks according to the present invention include wired networks, such as a local area network (LAN), a wide area network (WAN), and a value-added network (VAN), and all types of wireless networks, such as a mobile radio communication network, a wireless broadband Internet (WIBRO), and a high speed downlink packet access (HSDPA).

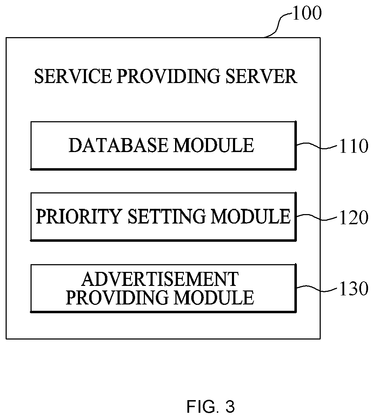

FIG. 3 is a diagram illustrating a configuration of the service providing server 100 in the banner advertisement service system in which a priority of each banner advertisement is decided by a reference region, according to the embodiment of the present invention. As illustrated in FIG. 3, the service providing server 100 in the banner advertisement service system in which a priority of each banner advertisement is decided by a reference region, according to the embodiment of the present invention, includes database module 110, a priority setting module 120, and an advertisement providing module 130. A configuration of the service providing server 100 will be described in detail below.

Content to be displayed as the banner advertisement and a reference region for the banner advertisement are input and stored into the database module 110. The content here is a group of pieces of data, which includes a character, an image, a moving image, and the like. Furthermore, in the priority setting module 120 that will be described below, the reference region is used to set a priority of the banner advertisement. The banner advertisement has the highest priority in the reference region. Therefore, the reference region refers to a region where the banner advertisement that is most noticeable to a user. The reference region is set through an advertiser device (not illustrated) and is independent of a physical location of an advertiser. That is, although the advertiser is located in an "A" region, the reference region for the banner advertisement may be set as a "B" region.

Furthermore, an area of the reference region is decided according to advertising expenses. In addition, the area of the reference region may be decided by the service providing server 100 itself independently of the advertising expenses, using a popularity rating of content, the frequency with content is recommended, or the like. For example, in a case where contents of an A banner advertisement is higher in popularity rating than contents of a B banner advertisement, an area of a reference region for the A banner advertisement is set to be greater than that of a reference region for the B banner advertisement. However, an area for the reference region is not decided by the above-described embodiment and may be decided by various methods.

In addition, multiple reference regions for one banner advertisement are input and stored into the database module 110. The reference region for the banner advertisement is not dependent on the physical location of the advertiser and is set to be independently in multiple regions. Therefore, the banner advertisement is noticeable more effectively to the user through multiple reference regions.

The priority setting module 120 sets a priority according to an area and distance of the reference region, stored in the database module 110, for the banner advertisement, with respect to a position specified by location information of the local device 200. More specifically, the priority setting module 120 sets priorities of banner advertisements according to whether or not the reference region, stored in the database module 110, for the banner advertisement includes the position specified by the location information of the local device 200. A specific configuration in which the priorities of the banner advertisements are set by the priority setting module 120 will be described below.

The advertisement providing module 130 arranges the banner advertisements stored in the database module 110, in the order of their priorities that are set by the priority setting module 120, and provides the arranged banner advertisements to the local device 200. That is, the advertisement providing module 130 transmits data on the banner advertisement of which the priority is set, to the local device 200 over a network. The local device 200 outputs the data on the banner advertisement of which the priority is set, which is received from the advertisement providing module 130, to the display, and thus the banner advertisements are displayed to the user in the order of their priorities.

Furthermore, the advertisement providing module 130 divides the banner advertisements into categories and provides the resulting banner advertisements. The advertisement providing module 130 sorts out the banner advertisements that are to be provided to the local device 200, according to their categories, and provides only the banner advertisements that are included in the category selected by the user. The categories are stored in the format of a tag that is included in the banner advertisement, in the database module 110. For example, various categories are defined according to types of companies, such as famous restaurants, banks, hotels, and cafes.

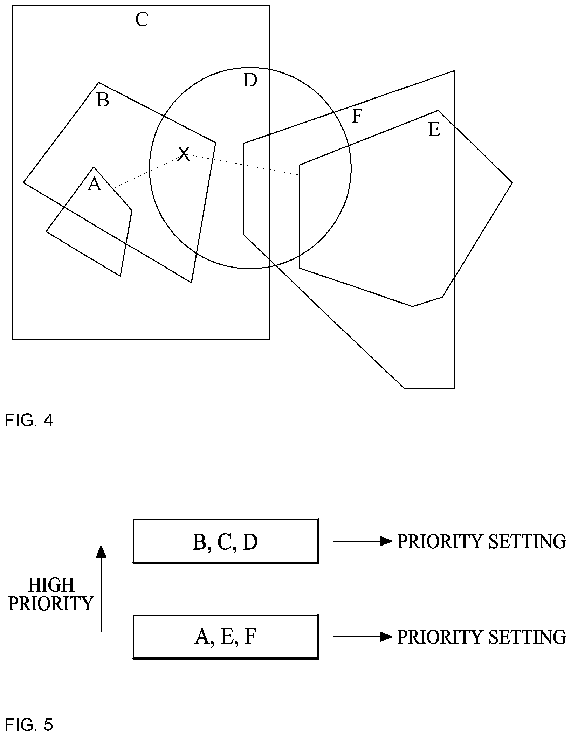

FIG. 4 is a diagram illustrating reference regions in the banner advertisement service system in which a priority of each banner advertisement is decided by a reference region, according to the embodiment of the present invention. A configuration will be described below in which the priorities of the banner advertisements are set by the priority setting module 120 in a case where the respective reference regions A, B, C, D, E, and F of banner advertisements A, B, C, D, E, and F are defined as illustrated in FIG. 4 and where a position that is specified by the location information of the local device 200 is defined as X.

FIG. 5 is a diagram illustrating that the priorities are set by the priority setting module 120 in the banner advertisement service system in which a priority of each banner advertisement is decided by a reference region, according to the embodiment of the present invention. As illustrated in FIG. 5, the priority setting module 120 sets the priority of the banner advertisement according to whether or not the reference region, stored in the database module 110, for the banner advertisement includes the position specified by the location information of the local device 200. More specifically, in a case where the reference region, stored in the database module 110, for the banner advertisement includes the position specified by the location information of the local device 200, the priority setting module 120 sets the priority of the banner advertisement to be high.

With reference to FIG. 4, the position X specified by the location information of the local device 200 is included in the reference regions B, C, and D, but is not included in the reference regions A, E, and F. As illustrated in FIG. 5, the priority setting module 120 sets priorities of the reference regions B, C, and D each of which includes the position X specified by the location information of the local device 200 to be higher than those of the reference regions A, E, and F. Therefore, the priority setting module 120 sets priorities of banner advertisements B, C, and D, which occupy the reference regions B, C, D, respectively, to be higher than those of banner advertisements A, E, and F, which occupy the reference regions A, E, and F.

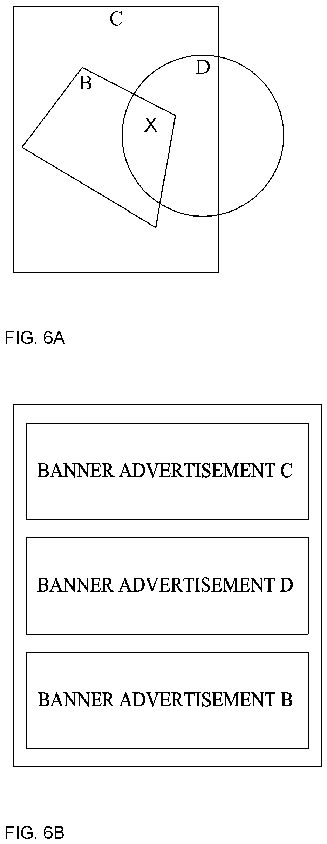

FIG. 6 is a diagram illustrating that the priorities of the reference regions B, C, and D are set by the priority setting module 120 in the banner advertisement service system in which a priority of each banner advertisement is decided by a reference region, according to the embodiment of the present invention. In a case where the reference region, stored in the database module 110, for the banner advertisement includes the position specified by the location information of the local device 200, the priority setting module 120 sets the priorities of the banner advertisements in the order of decreasing an area of the reference region for the banner advertisement. As illustrated in FIG. 6A, the reference regions B, C, and D each include the position X specified by the location information of the local device 200. However, among the reference regions, the reference region C has the greatest area, followed by the reference region D and finally the reference region B. Therefore, the priority setting module 120 sets the priorities of the banner advertisements which occupy the reference regions B, C, and D, respectively, which each include the position X specified by the location information of the local device 200, in such a manner that the banner advertisement C has the highest priority, followed by the banner advertisement D and finally the banner advertisement B. The advertisement providing module 130 arranges the banner advertisements in the order of their priorities that are set by the priority setting module 120. Accordingly, the order of the banner advertisements that are displayed on the local device 200 is as illustrated in FIG. 6B.

However, according to embodiments, in the case where the reference region, stored in the database module 110, for the banner advertisement includes the position specified by the location information of the local device 200, the priority setting module 120 may set the priorities of the banner advertisements in the order of increasing an area of the reference region for the banner advertisement. In a case where the priorities of the banner advertisements are set only in the order of decreasing the area of the reference region, a banner advertisement for a small-scale company that faces a shortage of capital has to be set to have a low priority. Therefore, the priorities of the banner advertisements may be set in the order of increasing the area of the reference region for the banner advertisement and thus may preferentially provide benefit to a small-scale company or the like.

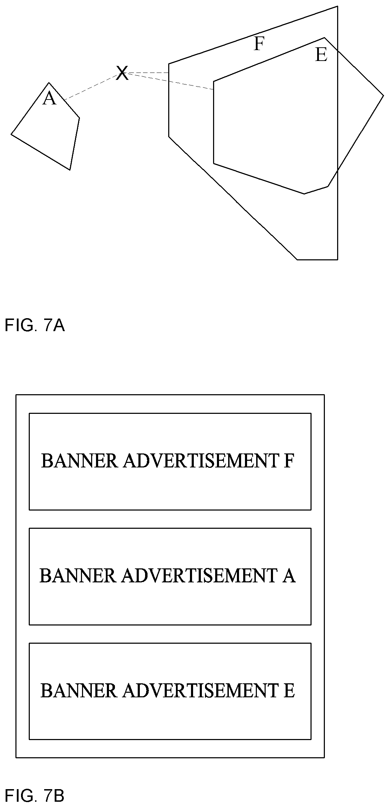

FIG. 7 is a diagram illustrating that the respective priorities of the reference regions A, E, and F are set by the priority setting module 120 in the banner advertisement service system in which a priority of each banner advertisement is decided by a reference region, according to the embodiment of the present invention. In a case where the reference region, stored in the database module 110, for the banner advertisement does not include the position specified by the location information of the local device 200, the priority setting module 120 sets the priorities of the banner advertisements in the order of increasing the least distance between the position specified by the location information of the local device 200 and a border line of the reference region for the banner advertisement. As illustrated in FIG. 7A, the reference regions A, E, and F do not include the position X specified by the location information of the local device 200. At this time, among the reference regions, the reference F has a border line of which the least distance from the position X specified by the location information of the local device 200 is shortest, followed by the reference region A and finally the reference region E. Therefore, the priority setting module 120 sets the priorities of the banner advertisements which occupy the reference regions A, E, and F, respectively, which each do not include the position X specified by the location information of the local device 200, in such a manner that the banner advertisement F has the highest priority, followed by the banner advertisement A and finally the banner advertisement E. The advertisement providing module 130 arranges the banner advertisements in the order of their priorities that are set by the priority setting module 120. Accordingly, the order of the banner advertisements that are displayed on the local device 200 is as illustrated in FIG. 7B.

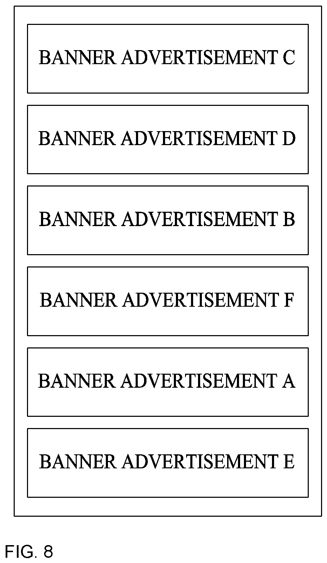

FIG. 8 is a diagram illustrating the banner advertisement that is output to the display unit of the local device 200 in the banner advertisement service system in which a priority of each banner advertisement is decided by a reference region, according to the embodiment of the present invention. As described above, the priority setting module 120 sets the priorities of the banner advertisements according to the width and distance of the reference region. With reference to illustrations in FIGS. 4 to 7, the priority setting module 120 sets the priorities of the banner advertisements which occupy the reference regions B, C, and D, respectively, which each include the position X specified by the location information of the local device 200, in such a manner that the banner advertisement C has the highest priority, followed by the banner advertisement D and finally the banner advertisement B. Therefore, the priority setting module 120 sets the priorities of the banner advertisements which occupy the reference regions A, E, and F, respectively, which each do not include the position X specified by the location information of the local device 200, in such a manner that the banner advertisement F has the highest priority, followed by the banner advertisement A and finally the banner advertisement E. At this time, the priority setting module 120 sets the priority of the banner advertisement, which occupies the reference region including the position X specified by the location information of the local device 200, to be high. Therefore, the priority setting module 120 sets the priorities of the banner advertisement in such a manner that the banner advertisement C has the highest priority, followed by the banner advertisement D, the banner advertisement B, the banner advertisement F, the banner advertisement A, and finally the banner advertisement E. Accordingly, the order of the banner advertisements that are displayed on the local device 200 is as illustrated in FIG. 8.

Furthermore, in a case where the least distances are the same, the priority setting module 120 sets the priorities of the banner advertisements in the order of decreasing the area of the reference region for the banner advertisement. In a case where in FIG. 7, the least distance of the border line of the reference region A from the position X specified by the location information of the local device 200 and the least distance of the border line of the reference region E therefrom are the same, the priority setting module 120 sets the priority of the banner advertisement E occupying the reference region E to be higher than the banner advertisement A occupying the reference region A. This is because the reference region for the reference region E has a greater area than that for the reference region A.

In addition, the priority setting module 120 sets the priorities of the banner advertisements according to their categories. As described above, the category is stored in the form of a tag that is included in the banner advertisement, in the database module 110 and therefore, the priority setting module 120 sets the priorities of the banner advertisements included in the same category. In a case where the priorities of the banner advertisements are set according to their categories, the priority setting module 120 compares only the reference regions for the banner advertisements included in the corresponding category without comparing the reference regions for all banner advertisements. Therefore, an amount of computation by the service providing server 100 is decreased, and the priorities of the banner advertisements are set in a more rapid manner.

The reference region for the banner advertisement takes the shape of a polygon or a circle. That is, the reference region for the banner advertisement may come in various shapes. With reference to FIG. 4, the reference regions A, B, C, D, E, and F come in different shapes. According to the embodiment of the present invention, in the banner advertisement service system in which a priority of each banner advertisement is decided by a reference region, the priority of the banner advertisement varies according to whether or not the reference region includes the position X specified by the location information of the local device 200. Therefore, the priority of the banner advertisement also varies with a shape of the reference region. That is, when the reference region is set to be shaped in such a manner as to include a specific position, even if the area of the reference region is not great, the priority of the banner advertisement is set to be high at the specific position. By setting the reference region to take the shape of a polygon or a circle, an advertiser sets the reference region to include at the specific position the position X specified by the location information of local device 200. Therefore, the reference region is set to take the shape of a polygon or a circle instead of simply increasing the area of the reference region without considering the position thereof. Thus, the advertiser can make a banner advertisement noticeable to the user in a more efficient manner at a specific position where an advertisement is desired to be provided.

At this point, at least part of one reference region covers part of another reference region. The advertiser sets the reference region for the banner advertisement through an advertiser device. Therefore, in a case where reference regions are set by many advertisers, at least part of one reference region covers part of another reference region. In addition, in a case where there are multiple reference regions for one banner advertisement, at least part of one reference region also covers part of another reference region. However, according to the embodiment of the present invention, in the banner advertisement service system in which a priority of each banner advertisement is decided by a reference region, the priority setting module 120 sets the priorities of the banner advertisements according to the area and distance of the reference region. Therefore, although part of one reference region covers part of another reference region, the priorities of the banner advertisements can be set. Therefore, although reference regions for many banner advertisements are set in a complicatedly related manner, the banner advertisements can be arranged according to their priorities.

Furthermore, the service providing server 100 receives the location information of the local device 200 at a predetermined time interval. In a case where the local device 200 is a mobile device, when a user who carries the mobile device moves and thus the position X specified by the location information of the local device 200 is changed, the priority of the banner advertisement has to be set with respect to the changed position X. Therefore, the service providing server 100 receives the location information of the local device 200 at a predetermined time interval, and the priority setting module 120 resets the priority of the banner advertisement according to the received location information. At this point, various time intervals may be predetermined according to a user's request.

As described above, according to the present invention, in the banner advertisement service system in which a priority of each banner advertisement is decided by a reference region, the reference region for the banner advertisement is set, and thus a banner advertisement is displayed on the local device regardless of the physical location of the advertiser in the region where an advertisement is desired to be provided. In addition, according to the present invention, in the banner advertisement service system in which a priority of each banner advertisement is decided by a reference region, the banner advertisement that is displayed on the local device varies according to the location information of the local device, and the priority of the banner advertisement is set on the basis of the area and distance of the reference region. Thus, the banner advertisement is preferentially made to be noticeable at the location that is desired by the advertiser.

It is possible that a person of ordinary skill in the art to which the present invention pertains makes various modifications to the present invention described above and implements various applications thereof. The scope of the technical idea of the present invention should be defined by the following claims.

## Claims

1. A banner advertisement service system for providing a banner advertisement to a local device, in which a priority of each banner advertisement is decided by a reference region, the banner advertisement service system comprising:
a service providing server that receives a request for the banner advertisement from the local device and provides the banner advertisement to the local device, wherein
the service providing server comprises:
a database module into which content to be displayed as the banner advertisement and a reference region, independent of a location of an advertiser, for the banner advertisement are input and stored;
a priority setting module that sets priorities of banner advertisements according to an area and distance of the reference region, stored in the database module, for the banner advertisement, with respect to a position specified by location information of the local device; and
an advertisement providing module that arranges the banner advertisements stored in the database module according to the priorities thereof that are set by the priority setting module, and provides the resulting banner advertisements to the local device,
wherein the priority setting module sets the priorities of the banner advertisements according to whether or not the reference region, stored in the database module, for the banner advertisement includes the position specified by the location information of the local device,
the priority setting module sets the priorities of the banner advertisements in the order of decreasing an area of the reference region for the banner advertisement, in a case where the reference region, stored in the database module, for the banner advertisement includes the position specified by the location information of the local device, and sets the priorities of the banner advertisements in the order of increasing the area of the reference region for the banner advertisement, in a case where benefit has to be preferentially provided to a small-scale company, and
the priority setting module sets the priorities of the banner advertisements in the order of increasing the least distance between the position specified by the location information of the local device and a border line of the reference region for the banner advertisement, in a case where the reference region, stored in the database module, for the banner advertisement does not include the position specified by the location information of the local device.

2. The banner advertisement service system according to claim 1, wherein in a case where the least distances are the same, the priority setting module sets the priorities of the banner advertisements in the order of decreasing the area of the reference region for the banner advertisement.

3. The banner advertisement service system according to claim 1, wherein the priority setting module sets the priorities of the banner advertisements according to the respective categories thereof.

4. The banner advertisement service system according to claim 1, wherein the reference region for the banner advertisement takes the shape of a polygon or a circle.

5. The banner advertisement service system according to claim 1, wherein multiple reference regions for one banner advertisement are input and stored into the database module.

6. The banner advertisement service system according to claim 5, wherein at least part of one reference region covers part of another reference region.

7. The banner advertisement service system according to claim 1, wherein the service providing server receives the location information of the local device at a predetermined time interval.
